(19) Europäisches Patentamt
European Patent Office
Office européen des brevets

(11) **EP 4 746 178 A1**

(12) **EUROPEAN PATENT APPLICATION**
published in accordance with Art. 153(4) EPC

(43) Date of publication:
**20.05.2026 Bulletin 2026/21**

(21) Application number: **24857837.9**

(22) Date of filing: **11.05.2024**

(51) International Patent Classification (IPC):
**H01M 50/528** $^{(2021.01)}$     **H01M 50/552** $^{(2021.01)}$
**H01M 50/186** $^{(2021.01)}$

(52) Cooperative Patent Classification (CPC):
**H01M 50/186; H01M 50/528; H01M 50/552;**
**Y02E 60/10**

(86) International application number:
**PCT/CN2024/092650**

(87) International publication number:
**WO 2025/044288 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 CN 202322303114 U**

(71) Applicant: **Sunwoda Mobility Energy Technology
Co., Ltd.
Shenzhen, Guangdong 518107 (CN)**

(72) Inventors:
• **YUAN, Cheng**
 **Shenzhen, Guangdong 518107 (CN)**
• **YANG, Wei**
 **Shenzhen, Guangdong 518107 (CN)**
• **XU, Lun**
 **Shenzhen, Guangdong 518107 (CN)**
• **LIN, Yongxiang**
 **Shenzhen, Guangdong 518107 (CN)**

(74) Representative: **Elzaburu S.L.P.
Edificio Torre de Cristal
Paseo de la Castellana 259 C, planta 28
28046 Madrid (ES)**

(54) **SECONDARY BATTERY AND BATTERY PACK**

(57) Disclosed are a secondary battery and a battery pack. By forming a through-hole in a terminal, arranging a sealing sheet in the through-hole, welding a first end of the sealing member to a first current collecting plate, and welding a second end of the sealing member to the terminal, the terminal is electrically connected to the first current collecting plate through the sealing sheet, and the terminal is not welded to the first current collecting plate. The welding positions of the sealing member and the current collecting plate fit more tightly without any gap, which ensures the welded effect while ensuring the sealing effect.

FIG. 4

EP 4 746 178 A1

## Description

This application claims priority to Chinese Patent Application No. 202322303114.0, filed with the China National Intellectual Property Administration on August 25, 2023, and entitled "SECONDARY BATTERY AND BATTERY PACK", which is hereby incorporated by reference in its entirety.

## TECHNICAL FIELD

The present application relates to the technical field of batteries, and in particular to a secondary battery and a battery pack.

## BACKGROUND

In existing secondary batteries, the terminal post and the current collecting plate are usually connected by penetration welding. Typically, a slot is opened on the terminal post, and the bottom of the slot is penetration welded to the current collecting plate to achieve electrical connection.

## SUMMARY

A first aspect of the embodiments of the present application provides a secondary battery, including: a housing, having an accommodating cavity therein, the housing having a first direction; an electrode assembly, arranged in the accommodating cavity; a first current collecting plate, arranged in the accommodating cavity, and the first current collecting plate being electrically connected to one end of the electrode assembly in the first direction; and, the secondary battery further includes: a terminal, where the terminal is fixedly connected to the housing and a portion of the terminal located in the accommodating cavity, the terminal is arranged on one side of the first current collecting plate away from the electrode assembly in the first direction, and the terminal is provided with a through-hole that penetrates the terminal along the first direction; and a sealing member, where the sealing member is at least partially arranged in the through-hole to seal the through-hole, the sealing member includes a first end and a second end arranged opposite to each other along the first direction, the first end is welded and electrically connected to the first current collecting plate, the second end is welded and electrically connected to the terminal, and the terminal is electrically connected to the first current collecting plate through the sealing member.

Optionally, the sealing member includes a columnar portion and a connecting portion, the columnar portion is inserted into the through-hole, the connecting portion is arranged on one side of the columnar portion away from the first current collecting plate and is arranged around the columnar portion, and the connecting portion is arranged outside the housing to be welded and electrically connected to the terminal.

Optionally, the columnar portion is provided with a groove extending in the first direction, the columnar portion includes a bottom plate and a side plate connected around the bottom plate, the bottom plate and the side plate are enclosed to form the groove, and the bottom plate has an inner bottom wall and an outer bottom wall arranged opposite to each other along the first direction; where the outer bottom wall is welded and electrically connected to the first current collecting plate, and the side plate abuts against an inner wall of the through-hole to block the through-hole.

Optionally, an orthographic projection of an inner wall surface of the side plate on a projection plane perpendicular to the first direction has two first contour points opposite to each other in a second direction, and a first line segment extending along the second direction is formed between the two first contour points, and the first line segment has a length of $A$ mm, which is a maximum dimension of orthographic projection of the inner wall surface of the side plate on the projection plane in the second direction, where 3 mm $\leq A \leq$ 12 mm; and the first direction is orthogonal to the second direction.

Optionally, an orthographic projection of an outer wall surface of the side plate on a projection plane perpendicular to the first direction has two second contour points opposite to each other in the second direction, and a second line segment extending along the second direction is formed between the two second contour points, and the second line segment has a length of $B$ mm, which is a maximum dimension of orthographic projection of the outer wall surface of the side plate on the projection plane in the second direction, where 3.5 mm $\leq B \leq$ 17.5 mm, and it is satisfied: $0.3 \leq A/B \leq 0.99$.

Optionally, a distance between the inner bottom wall and the outer bottom wall of the groove in the first direction is $t_1$ mm, and a distance of a welded part between the first current collecting plate and the outer bottom wall in the first direction is $t_2$ mm;

satisfying at least one of the following characteristics:

i),

$$0.1 \text{ mm} \le t_1 \le 2 \text{ mm};$$

ii),

$$, 0.1 \text{ mm} \le t_2 \le 1 \text{ mm};$$

iii),

$$0.1 \le t_1 / t_2 \le 5.$$

Optionally, a second end face of the terminal is provided with an annular boss surrounding the through-hole, and the annular boss is provided with a first annular groove surrounding the through-hole;
the connecting portion is embedded in the first annular groove, and the connecting portion is welded to a groove wall of the first annular groove.

Optionally, the connecting portion is provided with a second annular groove, and the sealing member is welded to the groove wall of the first annular groove of the terminal through a groove wall of the second annular groove;
where, an orthographic projection of a region where the bottom wall is welded to the first current collecting plate on a projection plane perpendicular to the first direction is located within an orthographic projection of a region where the second annular groove is welded to the first annular groove on a projection plane perpendicular to the first direction.

Optionally, one side of the first current collecting plate away from the electrode assembly in the first direction is provided with a protruding portion, and the protruding portion extends into an inner side of the through-hole, and the protruding portion is welded to the bottom plate.

Optionally, a gap exists between an outer wall of the protruding portion and an inner wall of the through-hole.

A second aspect of the embodiments of the present application provides a battery pack, including the secondary battery as described above.

## BRIEF DESCRIPTION OF DRAWINGS

FIG. 1 is a first structurally schematic diagram of a secondary battery provided by an embodiment of the present application.
FIG. 2 is an exploded view of FIG. 1.
FIG. 3 is a cross-sectional view of FIG. 1 along an E-E line.
FIG. 4 is a structurally schematic diagram enlarged at position F in FIG. 3.
FIG. 5 is a structurally schematic diagram of a terminal in a secondary battery provided by an embodiment of the present application.
FIG. 6 is a first structurally schematic diagram of a sealing member in a secondary battery provided by an embodiment of the present application.
FIG. 7 is a cross-sectional view of FIG. 6 along a G-G line.
FIG. 8 is a cross-sectional view of a combination of a terminal and a seal member in a secondary battery provided by an embodiment of the present application.
FIG. 9 is a second structurally schematic diagram of a secondary battery provided by an embodiment of the present application.
FIG. 10 is a third structurally schematic diagram of a secondary battery provided by an embodiment of the present application.

Explanation of reference signs:

1, secondary battery;
10, housing; 101, accommodating cavity; 11, opening;
20, electrode assembly; 21, main body; 22, tab; 221, first tab; 222, second tab;
30, first current collecting plate; 31, protruding portion; 32, limiting protrusion;
40, terminal; 41, through-hole; 401, first end face; 402, second end face; 42, annular boss; 43, first annular groove; 44, insulating gasket; 45, sealing ring; 46, riveting block;

50, sealing member; 501, columnar portion; 502, connecting portion; 51, first end; 52, second end; 53, groove; 531, bottom wall; 5311, inner bottom wall; 5312, outer bottom wall; 532, side plate; 5321, first contour point; 5322, second contour point; 5323, third contour point; 5324, fourth contour point; 533, top surface; 54, second annular groove; 60, top cover;

70, second current collecting plate;

80, sealing sheet;

X, first direction; Y, second direction.

**DESCRIPTION OF EMBODIMENTS**

The technical solutions in the embodiments of the present application will be clearly and completely described below in conjunction with the drawings in the embodiments of the present application. Obviously, the described embodiments are only part of the embodiments of the present application, rather than all of the embodiments. Based on the embodiments in the present application, all other embodiments obtained by those skilled in the art without creative work are within the scope of protection of the present application. In addition, it should be understood that the specific implementations described herein are merely used for illustrating and explaining the present application, and are not intended to limit the present application.

The present application provides a battery pack, including a secondary battery.

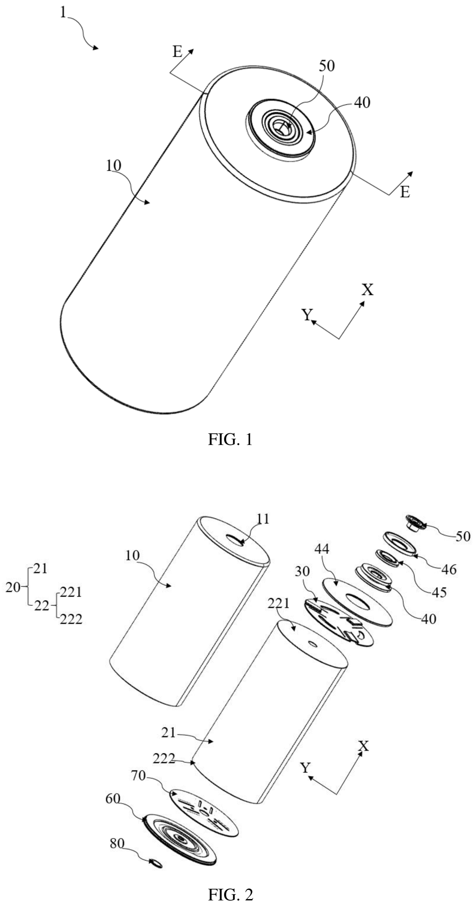

In some embodiments of the present application, a secondary battery 1 is provided. Referring to FIG. 1 to FIG. 10, the secondary battery 1 includes: a housing 10, an electrode assembly 20, a first current collecting plate 30, a terminal 40, and a sealing member 50.

Referring to FIG. 1 to FIG. 4, the housing 10 is provided with an accommodating cavity 101 therein, and the housing 10 has a first direction X. In the embodiments shown in FIG. 1 to FIG. 4, the housing 10 is cylindrical in shape, the secondary battery 1 is a cylindrical battery, and the first direction X is an axial direction of the housing 10. In other implementations of the embodiments of the present application, the housing 10 may be square in shape, forming a square battery. The housing 10 may be made of a variety of materials, such as copper, iron, aluminum, stainless steel, aluminum alloy, plastic, etc., and is not particularly limited in the embodiments of the present application.

Referring to FIG. 2 to FIG. 4, as well as FIG. 9 to FIG. 10, the electrode assembly 20 is arranged in the accommodating cavity 101 of the housing 10, and the electrode assembly 20 extends along the first direction X. In the embodiments shown in FIG. 2 to FIG. 4, the electrode assembly 20 includes a main body 21 and a tab 22, the main body 21 extends along the first direction X, the tab 22 includes a first tab 221 and a second tab 222, the first tab 221 is arranged at one end of the main body 21 in the first direction X, and the second tab 222 is arranged at the other end of the main body 21 in the first direction X.

Where, the main body 21 includes electrode sheets and a separator. Specifically, the main body 21 includes a positive electrode sheet, a negative electrode sheet and a separator, and the separator is arranged between the positive electrode sheet and the negative electrode sheet to form insulation between the positive electrode sheet and the negative electrode sheet. The positive electrode sheet, the separator and the negative electrode sheet are wound to form the main body 21 of the electrode assembly 20. The first tab 221 is a positive tab, and the second tab 222 is a negative tab. The first tab 221 is connected to the positive electrode sheet, and the second tab 222 is connected to the negative electrode sheet, where the positive electrode sheet is provided with a positive active material, and the positive electrode sheet at one end of the first direction X is not provided with the positive active material so as to form the first tab 221; and the negative electrode sheet is provided with a negative active material, and the negative electrode sheet at the other end of the first direction X is not provided with the negative active material so as to form the second tab 222. Referring to FIG. 2 to FIG. 4, as well as FIG. 9 to FIG. 10, the electrode assembly 20 is a wound structure. In other implementations of the present application, the positive electrode sheet, the separator and the negative electrode sheet are of a stacked structure, which form the main body 21 of the electrode assembly 20 after being stacked.

In some embodiments of the present application, referring to FIG. 2 to FIG. 4, the first current collecting plate 30 is arranged in the accommodating cavity 101 of the housing 10, the first current collecting plate 30 adopts a plate-like structure, and the first current collecting plate 30 is electrically connected to one end of the electrode assembly 20 in the first direction X. Where, the first current collecting plate 30 is a positive electrode current collecting plate, the first current collecting plate 30 is arranged on an end face of one end of the electrode assembly 20 where the first tab 221 is arranged, the first current collecting plate 30 abuts against the end face of one end of the electrode assembly 20 where the first tab 221 is arranged, and the first current collecting plate 30 is electrically connected to the electrode assembly 20 through the first tab 221.

Referring to FIG. 2 to FIG. 4, as well as FIG. 9 to FIG. 10, the terminal 40 is fixedly connected to the housing 10 and a portion of the terminal 40 located in the accommodating cavity 101. The terminal 40 is arranged on a side of the first current collecting plate 30 away from the electrode assembly 20 in the first direction X. The terminal 40 is provided with a through-hole 41 that penetrates the terminal 40 along the first direction X. Where, referring to FIG. 2 to FIG. 4, an opening 11 is provided on an end surface of the housing 10 close to the first current collecting plate 30 in the first direction X. The terminal 40 is riveted and installed in the opening 11. A part of the terminal 40 in the first direction X is located outside the housing 10, and another part of the terminal 40 in the first direction X is located inside the housing 10. One end of the terminal 40 located outside the housing 10 is electrically connected to an external electrical device. The first tab 221 of the electrode assembly 20 is electrically connected to the terminal 40 through the first current collecting plate 30. Where, the terminal 40 is a positive terminal, and the terminal 40 constitutes a positive electrode terminal of the secondary battery 1.

In some embodiments of the present application, referring to FIG. 1 to FIG. 4, as well as FIG. 6 to FIG. 10, a sealing member 50 is at least partially arranged in the through-hole 41 of the terminal 40 to block the through-hole 41. The sealing member 50 includes a first end 51 and a second end 52 arranged opposite to each other along the first direction X. The first end 51 is welded and fixed to the first current collecting plate 30, and the sealing member 50 is electrically connected to the first current collecting plate 30 through the first end 51. The second end 52 is welded and fixed to the terminal 40, and the sealing member 50 is electrically connected to the terminal 40 through the second end 52. The terminal 40 is electrically connected to the first current collecting plate 30 through the sealing member 50.

In existing secondary batteries, the assembly method between the terminal and the current collecting plate usually involves first riveting the terminal to the housing, and then performing penetration welding at the contact part between the terminal and the current collecting plate to achieve the fixation and electrical connection between the terminal and the current collecting plate. However, during the riveting process of the terminal and the housing, the terminal will shift, resulting in a gap between the current collecting plate and the end face of the end of the terminal in contact with the current collecting plate. The existence of the gap leads to poor welding during the penetration welding process, and there is a risk of cold solder joints at the position corresponding to the gap, which in turn affects the smoothness and stability of current transmission among the electrode assembly, the current collecting plate and the terminal, and affects the service performance of the secondary battery.

In contrast, in the secondary battery 1 provided by this embodiment of the present application, a through-hole 41 is formed on the terminal 40, and a sealing member 50 is arranged in the through-hole 41, the sealing member 50 blocks the through-hole 41 to ensure the sealing performance of the accommodating cavity 101 of the housing 10, and at the same time, the sealing member 50 has a first end 51 fixedly welded and electrically connected to the first current collecting plate 30, and a second end 52 fixedly welded and electrically connected to the terminal 40. Thus the electrical connection between the terminal 40 and the first current collecting plate 30 may be achieved without need of fixed welding between the terminal 40 and the first current collecting plate 30. The terminal 40 is electrically connected to the first current collecting plate 30 through the sealing member 50, and there is no welding relationship between the terminal 40 and the first current collecting plate 30. Thus, even if the terminal 40 shifts during the riveting and assembly process with the housing 10 and thus result in a gap between the terminal 40 and the first current collecting plate 30, it will not affect the stability of the welded connection between the first end 51 of the sealing member 50 and the first current collecting plate 30. Moreover, good flatness of the end face of the first end 51 can be ensured during processing of the sealing member 50, so that the fit between the first current collecting plate 30 and the first end 51 is tighter without formation of gap. In the process of penetration welding between the first end 51 and the first current collecting plate 30, there is no risk of cold solder joints, thereby ensuring the stability of current transmission among the electrode assembly 20, the first current collecting plate 30, the sealing member 50 and the terminal 40, and ensuring the service performance and service stability of the secondary battery 1.

Optionally, the sealing member 50 is made of a conductive material, which may be the same material as that of the terminal 40.

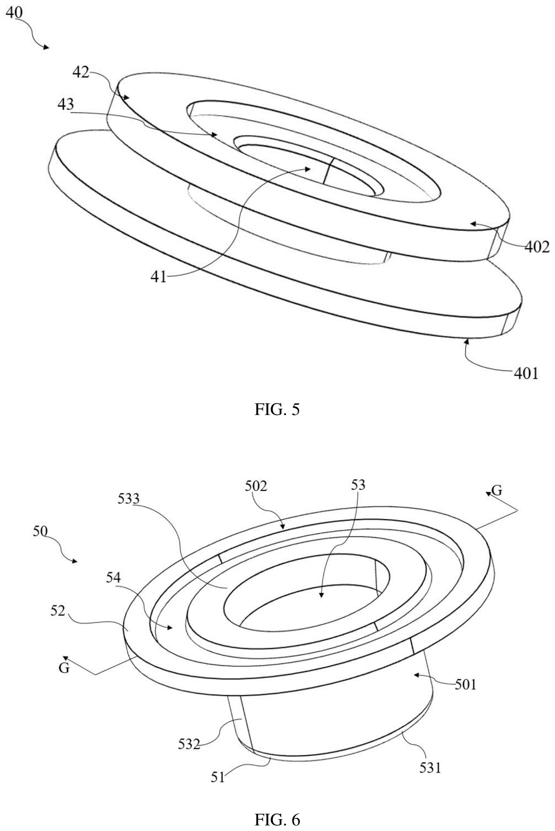

In some embodiments of the present application, referring to FIG. 6 to FIG. 8, the sealing member 50 includes a columnar portion 501 and a connecting portion 502, the columnar portion 501 is inserted into the through-hole 41 of the terminal 40 to block the through-hole 41, the connecting portion 502 is arranged on a side of the columnar portion 501 away from the first current collecting plate 30 in the first direction X, and the connecting portion 502 is arranged around the columnar portion 501. One end of the columnar portion 501 close to the first current collecting plate 30 in the first direction X forms the first end 51 of the sealing member 50, and the columnar portion 501 is welded and electrically connected to the first current collecting plate 30. The columnar portion 501 and one end of the connecting portion 502 away from the columnar portion 501 in the first direction X forms the second end 52 of the sealing member 50. The connecting portion 502 is arranged on the outside of the housing 10, and the connecting portion 502 is used for welding and electrically connecting to the terminal 40.

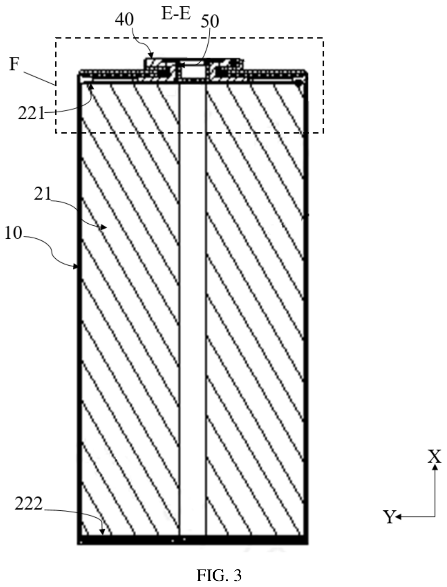

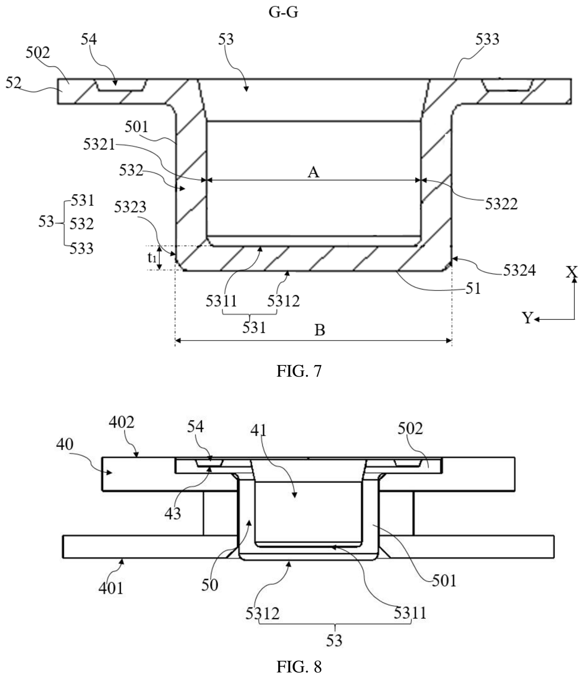

In some embodiments of the present application, referring to FIG. 3, FIG. 4, and FIG. 6 to FIG. 9, a groove 53 extending along the first direction X is provided on the columnar portion 501, and the columnar portion 501 includes a bottom plate 531 and a side plate 532 connected around the periphery of the bottom plate 531. Referring to FIG. 7 and FIG. 8, the bottom plate 531 includes an inner bottom wall 5311 and an outer bottom wall 5312 arranged opposite to each other along the first direction X. The outer bottom wall 5312 is welded and electrically connected to the first current collecting plate 30, and the side plate 532 abuts against the inner wall of the through-hole 41 of the terminal 40 to block the through-hole 41. The provision of the groove 53 can reduce the thickness of the columnar portion 501 in the first direction X, facilitating the welding and fixing between the bottom plate 531 and the first current collecting plate 30.

In some embodiments of the present application, referring to FIG. 7, the inner wall surface of the side plate 532 of the sealing member 50 has an orthographic projection on a projection plane perpendicular to the first direction X; and the orthographic projection has two first contour points 5321 and 5322 which are opposite to each other along the second direction Y. A first line segment (not shown) extending along the second direction Y is formed between the two first contour points 5321 and 5322, and the first line segment has a length of $A$ mm. $A$ is the maximum dimension of the orthographic projection of the inner wall surface of the side plate 532 on the projection plane in the second direction Y, satisfying $3 \text{ mm} \leq A \leq 12 \text{ mm}$. Specifically, the value of $A$ may be any value of 3 mm, 4 mm, 5 mm, 6 mm, 7 mm, 8 mm, 9 mm, 10 mm, 11 mm and 12 mm, or any value in a range defined by any two of these list values. The first direction X is orthogonal to the second direction Y. When the value of $A$ is within the above range, an effective welding area of the welded connection between the bottom plate 531 and the first current collecting plate 30, and a current-carrying area among the electrode assembly 20, the first current collecting plate 30 and the sealing member 50 can be both ensured, and also the diameter of the terminal 40 is not affected, keeping the diameter of the terminal 40 within a reasonable range and preventing any impact on the connection between the terminal 40 and the external electrical device.

Where, the method for determining the first line segment is as follows: taking a contour line of the orthographic projection of the inner wall surface of the side plate 532 on the projection plane perpendicular to the first direction X as a reference, a circumscribed rectangle is drawn, with the contour line of the orthographic projection inscribed in this rectangle; in the second direction Y, the circumscribed rectangle has two sides opposite to each other along the second direction Y; at each of the tangent points where the two sides meet the contour line of the orthographic projection, an extension line perpendicular to the second direction Y is drawn to form the first contour line; a line segment extending along the second direction Y and connecting the two first contour lines is made between the two first contour lines, with the line segment as the first line segment.

In some embodiments of the present application, referring to FIG. 7, the outer wall surface of the side plate 532 of the sealing member 50 has an orthographic projection on a projection plane perpendicular to the first direction X; and the orthographic projection has two second contour points 5323 and 5324 which are opposite to each other along the second direction Y. A second line segment (not shown) extending along the second direction Y is formed between the two second contour points 5323 and 5324, and the second line segment has a length of $B$ mm, where $3.5 \text{ mm} \leq B \leq 17.5$ mm. Specifically, the value of $B$ may be any value of 3.5, 4.0, 7.0, 10.0, 12.0, 14.0, 16.0, and 17.0, or a value between any two of these values. $B$ is the maximum size of the orthographic projection of the outer wall surface of the side plate 532 on the projection plane in the second direction Y. It further satisfies $0.3 \leq A / B \leq 0.99$. Specifically, the value of A / B may be any value of 0.3, 0.4, 0.5, 0.6, 0.7, 0.8, 0.9, and 0.99, or a value between any two thereof. When the value of A / B is within the above range, the wall thickness of the side plate 532 is within a reasonable range, ensuring the structural strength of the sealing member 50, preventing the sealing member 50 from shaking or tilting during the welding process with the first current collecting plate 30, and thus ensuring the welding effect.

Where, the method for determining the second line segment is as follows: taking a contour line of the orthographic projection of the outer wall surface of the side plate 532 on the projection plane perpendicular to the first direction as a reference, a circumscribed rectangle is drawn, with the contour line of the orthographic projection inscribed in this rectangle; in the second direction Y, the circumscribed rectangle has two sides opposite to each other along the second direction Y; at each of the tangent points where the two sides meet the contour line of the orthographic projection, an extension line perpendicular to the second direction Y is drawn to form the second contour line; a line segment extending along the second direction Y and connecting the two second contour lines is made between the two second contour lines, which is the second line segment.

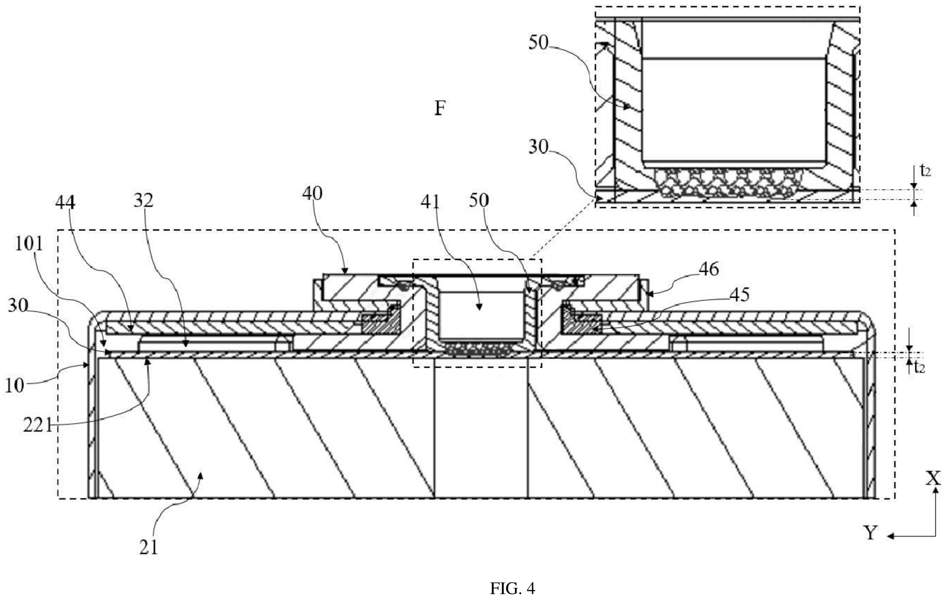

In some embodiments of the present application, referring to FIG. 7, a distance between the inner bottom wall 5311 and the outer bottom wall 5312 of the groove 53 in the first direction X is $t_1$ mm. Referring to FIG. 4, a distance of a welded part between the first current collecting plate 30 and the outer bottom wall 5312 in the first direction is $t_2$ mm. In other words, $t_2$ is a distance that a weld mark in the first current collecting plate 30 extends along the first direction X.

In some embodiments of the present application, $0.1 \text{ mm} \leq t_1 \leq 2 \text{ mm}$. Specifically, the value of $t_1$ may be any value of 0.1 mm, 0.3 mm, 0.5 mm, 0.7 mm, 0.9 mm, 1.0 mm, 1.3 mm, 1.5 mm, 1.7 mm, and 2 mm, or a value between any two thereof. When the value of $t_1$ is within the above range, the thickness of the bottom plate 531 in the first direction X can be kept within a reasonable range, thereby ensuring the welding strength between the bottom plate 531 and the first current collecting plate 30 during penetration welding, and ensuring welded stability.

In some embodiments of the present application, $0.1 \text{ mm} \leq t_2 \leq 1 \text{ mm}$. Specifically, the value of $t_2$ may be any value of 0.1 mm, 0.2 mm, 0.3 mm, 0.4 mm, 0.5 mm, 0.6 mm, 0.7 mm, 0.8 mm, 0.9 mm, and 1.0 mm, or a value between any two thereof. When the value of $t_2$ is within the above range, the part where the first current collecting plate 30 and the bottom plate 531 are welded can have a sufficient welded thickness, thereby ensuring the welded stability and firmness between the first current collecting plate 30 and the bottom plate 531, and avoiding the risk of cold solder joint.

In some embodiments of the present application, $0.1 \leq t_1 / t_2 \leq 5$. Specifically, the value of $t_1 / t_2$ may be any value of 0.1, 0.5, 1, 1.5, 2, 2.5, 3, 3.5, 4, 4.5 and 5 or a value between any two thereof. This can not only ensure the welded stability and firmness between the bottom plate 531 and the first current collecting plate 30, but also avoid the waste of excessive welding energy to reduce production cost.

In some embodiments of the present application, referring to FIG. 5, a second end face 402 of the terminal 40 is provided with an annular boss 42 surrounding the through-hole 41, and the annular boss 42 is provided with a first annular groove 43 surrounding the through-hole 41. Referring to FIG. 8, a connecting portion 502 of the sealing member 50 is embedded in the first annular groove 43, and the connecting portion 502 is welded to the first annular groove 43. Specifically, the connecting portion 502 is welded to the groove wall of the first annular groove 43 to achieve the welding fixation and electrical connection between the sealing member 50 and the terminal 40. The provision of the first annular groove 43 provides an accommodating space for the connecting portion 502 of the sealing member 50, so that the top surface 533 of the sealing member 50 is flush with the second end face 402 of the terminal 40 and lies in the same plane, ensuring flatness and sealing performance, and facilitating subsequent connection with an external circuit.

In some embodiments of the present application, referring to FIG. 6 to FIG. 8, the connecting portion 502 of the sealing member 50 is provided with a second annular groove 54. The sealing member 50 is welded to the first annular groove 43 of the terminal 40 through the second annular groove 54. The provision of the second annular groove 54 can reduce the thickness of the connecting portion 502 in the first direction X, thereby reducing the energy consumed during penetration welding between the connecting portion 502 and the annular boss 42, and ensuring the effect of penetration welding.

In some embodiments of the present application, referring to FIG. 4, FIG. 9 and FIG. 10, an orthographic projection of the region where the bottom plate 531 is welded to the first current collecting plate 30 on the projection plane perpendicular to the first direction X is located within an orthographic projection of the region where the second annular groove 54 is welded to the first annular groove 43 on the projection plane perpendicular to the first direction X. In this way, the welded connection between the sealing member 50 and the first current collecting plate 30, as well as the welded connection between the sealing member 50 and the terminal 40, can be ensured to remain undisturbed, ensuring the smooth proceeding of the welding process.

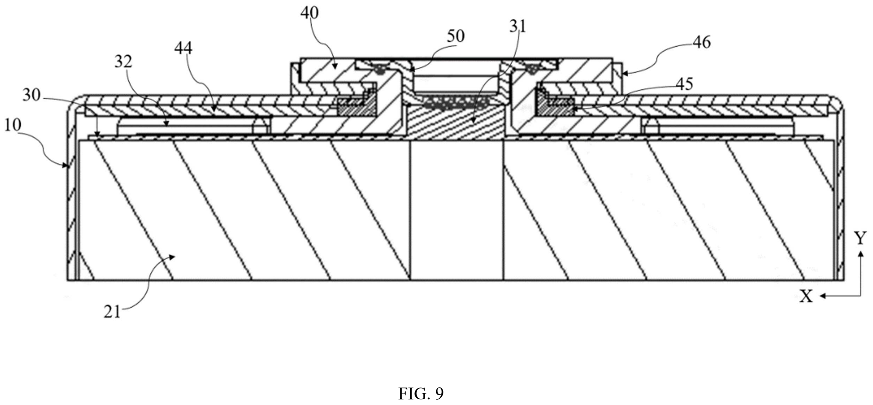

In some embodiments of the present application, referring to FIG. 9, one side of the first current collecting plate 30 away from the electrode assembly 20 in the first direction X is provided with a protruding portion 31. The protruding portion 31 extends into the inner side of the through-hole 41, and the protruding portion 31 is welded to the bottom plate 531 of the sealing member 50. The structural design of the protruding portion 31 on the first current collecting plate 30 enables a positioning of the terminal 40 through the protruding portion 31, so that the columnar portion 501 of the sealing member 50 can be welded and electrically connected to the protruding portion 31 of the first current collecting plate 30 on the inner side of the through-hole 41, thereby reducing the material used for manufacturing the sealing member 50 and ensuring the welded stability between the sealing member 50 and the first current collecting plate 30.

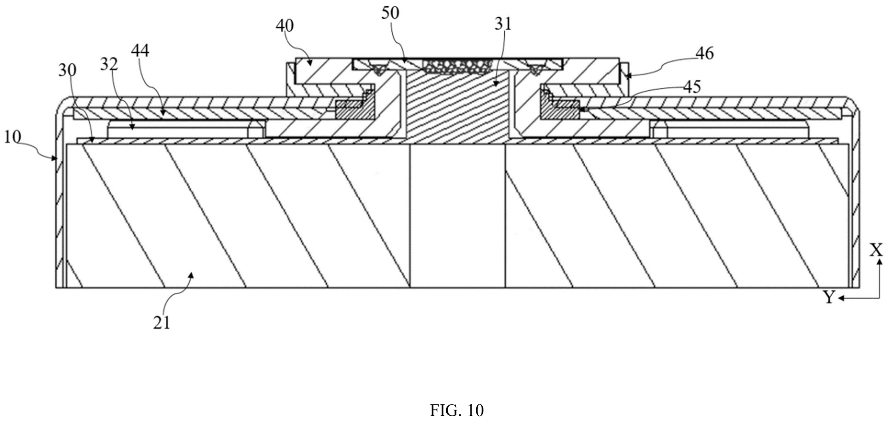

In some embodiments of the present application, referring to FIG. 10, one side of the first current collecting plate 30 away from the electrode assembly 20 in the first direction X is provided with a protruding portion 31. The protruding portion 31 extends into the inner side of the through-hole 41 and extends to the inner bottom wall of the first annular groove 43. Specifically, an end face of one end of the protruding portion 31 away from the electrode assembly 20 in the first direction X is flush with the plane where the inner bottom wall of the first annular groove 43 is located. The sealing member 50 has a flat sheet structure, and is embedded in the first annular groove 43. The sealing member 50 is welded and electrically connected to the protruding portion 31. The sealing member 50 is welded and electrically connected to the first annular groove 43 through the second annular groove 54.

In some embodiments of the present application, referring to FIG. 9 and FIG. 10, there is a gap (not shown) between the outer wall of the protruding portion 31 and the inner wall of the through-hole 41, thereby avoiding contact between the protruding portion 31 and the terminal 40 and avoiding unintended connection between the first current collecting plate 30 and the terminal 40.

In some embodiments of the present application, referring to FIG. 2, FIG. 4, FIG. 9 and FIG. 10, the secondary battery 1 further includes: an insulating gasket 44, a sealing ring 45 and a riveting block 46. The insulating gasket 44, the sealing ring 45 and the riveting block 46 are jointly riveted on the housing 10 from the outside to form the positive electrode terminal of the secondary battery 1.

One end of the housing 10 close to the terminal 40 in the first direction X is provided with an opening 11. One end of the terminal 40 away from the first current collecting plate 30 in the first direction X extends to the outside of the housing 10 through the opening 11 to connect with an external device. The sealing ring 45 is arranged in the accommodating cavity 101 of the housing 10. The sealing ring 45 surrounds the terminal 40 and is embedded in the opening 11 to seal the terminal 40 and the opening 11. The insulating gasket 44 is annular in shape, and surrounds the sealing ring 45. A lower surface of the insulating gasket 44 in the first direction X abuts against the first current collecting plate 30, and an upper surface of the insulating gasket 44 in the first direction X abuts against the inner wall of the housing 10, so that the terminal 40 and the first current collecting plate 30 are insulated from the housing 10, avoiding short circuits.

The riveting block 46 surrounds the terminal 40, and the riveting block 46 is annular in shape. The riveting block 46 is located on the outer side of the housing 10. The riveting block 46 surrounds an end of the terminal 40 that extends out of the housing 10. Specifically, the riveting block 46 is arranged between the riveting block 46 and the end face of an end of the housing 10 where the opening 11 is provided. The riveting block 46 is used for insulating the riveting block 46 from the housing 10 to avoid short circuits.

In some embodiments of the present application, referring to FIG. 2 and FIG. 3, the secondary battery 1 also includes: a top cover 60, a second current collecting plate 70, and a sealing sheet 80.

The second current collecting plate 70 is electrically connected to one end of the electrode assembly 20 away from the terminal 40 in the first direction X. In an embodiment of the present application, the second current collecting plate 70 is a negative electrode current collecting plate, and the second current collecting plate 70 is arranged on an end face of one end of the electrode assembly 20 where the second tab 222 is arranged, and the second current collecting plate 70 abuts against the end face of one end of the electrode assembly 20 where the second tab 222 is arranged, and the second current collecting plate 70 is electrically connected to the electrode assembly 20 through the second tab 222.

Referring to FIG. 2, one end of the housing 10 away from the terminal 40 in the first direction X is open, and the top cover 60 is covered on the opening. The top cover 60 is provided with a liquid injection port (not shown). The sealing sheet 80 is embedded in the liquid injection port to seal the top cover 60. The top cover 60, the second current collecting plate 70 and the sealing sheet 80 form a negative electrode terminal of the secondary battery 1.

In order to illustrate that the technical solution provided in the present application can well ensure that the current-carrying capacity of the battery cell at this location meets the requirements by setting a specific range of value of A, a specific range of value of B and a proportional relationship between the two values, Examples 1-14 are provided below for explanation.

Where, the method and requirements for the current-carrying test are as follows.

Method 1: At room temperature of 25 °C, a single cell is charged at a constant current of 2C, and the battery's state of charge (SOC) is charged from 10% to 80%. The temperature at the welding joint between the first current collecting plate 30 and the bottom plate 531 is measured to be $\leq$ 60 °C.

Method 2: At room temperature of 25 °C, a single cell is charged at a constant current of 4C, and the battery's state of charge (SOC) is charged from 10% to 80%. The temperature at the welding joint between the first current collecting plate 30 and the bottom plate 531 is measured to be $\leq$ 60 °C.

| Serial Number | $A$ (mm) | $B$ (mm) | $A/B$ | Current-carrying test result |
|---|---|---|---|---|
| Example 1 | 3 | 10 | 0.3 | Satisfy Method 1 |
| Example 2 | 5 | 13 | 0.38 | Satisfy Method 1 and Method 2 |
| Example 3 | 7 | 13 | 0.54 | Satisfy Method 1 and Method 2 |
| Example 4 | 12 | 13 | 0.92 | Satisfy Method 1 and Method 2 |
| Example 5 | 4 | 6 | 0.67 | Satisfy Method 1 and Method 2 |
| Example 6 | 4 | 7 | 0.57 | Satisfy Method 1 and Method 2 |
| Example 7 | 4 | 10 | 0.40 | Satisfy Method 1 and Method 2 |
| Example 8 | 5 | 7 | 0.71 | Satisfy Method 1 and Method 2 |
| Example 9 | 5 | 9 | 0.56 | Satisfy Method 1 and Method 2 |
| Example 10 | 5 | 11 | 0.45 | Satisfy Method 1 and Method 2 |
| Example 11 | 12 | 14 | 0.86 | Satisfy Method 1 and Method 2 |
| Example 12 | 12 | 15 | 0.80 | Satisfy Method 1 and Method 2 |
| Example 13 | 3 | 4 | 0.75 | Satisfy Method 1 |
| Example 14 | 3 | 5 | 0.60 | Satisfy Method 1 |

In order to illustrate that, by setting a specific range of value of $t_1$, a specific value range of value of $t_2$ and a proportional relationship between $t_1$ and $t_2$, the technical solution provided in the present application can well ensure the welded stability and firmness between the first collecting plate 30 and the bottom plate 531 to avoid the risk of cold solder joint or welding through, and ensure the connection strength between the two, Examples 1-15 are provided below for explanation.

Where, the testing method for welding effect is as follows: a fusion depth on the first current collecting plate 30 is tested, and a ratio of the fusion depth to $t_2$ shall be $\leq$ 0.9 to ensure no welding through; when $t_1 > t_2$, the ratio of the fusion depth to $t_2$ shall be $\geq$ 0.4 to ensure no cold solder joint, and when $t_1 \leq t_2$, the fusion depth shall be $\geq t_1$ to ensure no cold solder joint.

Where, the test method for connection strength is: the first current collecting plate 30 is welded to the bottom plate 531, and the welding area of all solutions is ensured to be consistent, being 8 mm$^2$; the connection force $F$ between the first current collecting plate 30 and the bottom plate 531 is tested, with Newton (N) as the unit, and $F \geq 50$ N is required; during the testing of the connection force $F$, an axis center of the first current collecting plate 30 and an axis center of the bottom plate 531 are on the same axis; the sealing member 50 is fixed, and a displacement is applied to the first current collecting plate 30 to move the first current collecting plate 30 in a direction away from the sealing member 50 until the joint between the two is completely separated. The maximum force in this process is $F$.

| Serial Number | $t_1$ (mm) | $t_2$ (mm) | $t_1 / t_2$ | Welding effect | Connection force $F$ |
|---|---|---|---|---|---|
| Example 1 | 0.1 | 0.5 | 0.20 | No cold solder joint, no welding through | $\geq 50$ N |
| Example 2 | 0.5 | 0.5 | 1.00 | No cold solder joint, no welding through | $\geq 50$ N |
| Example 3 | 1 | 0.5 | 2.00 | No cold solder joint, no welding through | $\geq 50$ N |
| Example 4 | 1.5 | 0.5 | 3.00 | No cold solder joint, no welding through | $\geq 50$ N |
| Example 5 | 2 | 0.5 | 4.00 | No cold solder joint, no welding through | $\geq 50$ N |
| Example 6 | 0.4 | 0.1 | 4.00 | No cold solder joint, no welding through | $\geq 50$ N |
| Example 7 | 0.4 | 0.5 | 0.80 | No cold solder joint, no welding through | $\geq 50$ N |
| Example 8 | 0.4 | 1.7 | 0.24 | No cold solder joint, no welding through | $\geq 50$ N |
| Example 9 | 0.4 | 1 | 0.40 | No cold solder joint, no welding through | $\geq 50$ N |
| Example 10 | 0.08 | 0.5 | 0.16 | No cold solder joint, no welding through | $\leq 50$ N |
| Example 11 | 2.2 | 0.9 | 2.44 | No cold solder joint, no welding through | $\geq 50$ N |
| Example 12 | 1 | 1.2 | 0.83 | No cold solder joint, no welding through | $\geq 50$ N |
| Example 13 | 2.2 | 1.2 | 1.83 | No cold solder joint, no welding through | $\geq 50$ N |
| Example 14 | 0.1 | 1 | 0.10 | No cold solder joint, no welding through | $\geq 50$ N |
| Example 15 | 0.08 | 1 | 0.08 | No cold solder joint, no welding through | $\leq 50$ N |

The above is a detailed introduction to a secondary battery and a battery pack provided by the embodiments of the present application. Specific examples are used herein to illustrate the principles and implementations of the present application. The description of the above embodiments is only intended to help understand the method of the present application and its core idea. At the same time, for those skilled in the art, based on the idea of the present application, there will be changes in the specific implementations and application scope. In conclusion, the content of the present specification should not be construed as a limitation on the present application.

**Claims**

1.  A secondary battery, comprising:

    a housing, provided with an accommodating cavity therein, and the housing having a first direction;
    an electrode assembly, arranged in the accommodating cavity;
    a first current collecting plate, arranged in the accommodating cavity, and the first current collecting plate being electrically connected to one end of the electrode assembly in the first direction;
    wherein, the secondary battery further comprises:

    a terminal, wherein the terminal is fixedly connected to the housing and a portion of the terminal located in the accommodating cavity, the terminal is arranged on one side of the first current collecting plate away from the electrode assembly in the first direction, and the terminal is provided with a through-hole that passes through the terminal along the first direction; and
    a sealing member, wherein the sealing member is at least partially arranged in the through-hole to block the through-hole, the sealing member comprises a first end and a second end arranged opposite to each other along the first direction, the first end is welded and electrically connected to the first current collecting plate, the second end is welded and electrically connected to the terminal, and the terminal is electrically connected to the first current collecting plate through the sealing member.

2. The secondary battery according to claim 1, wherein the sealing member comprises a columnar portion and a connecting portion, the columnar portion is inserted into the through-hole, the connecting portion is arranged on one side of the columnar portion away from the first current collecting plate and is arranged around the columnar portion, and the connecting portion is arranged outside the housing so as to be welded and electrically connected to the terminal.

3. The secondary battery according to claim 2, wherein the columnar portion is provided with a groove extending in the first direction, the columnar portion comprises a bottom plate and a side plate connected around the bottom plate, the bottom plate and the side plate are enclosed to form the groove, and the bottom plate has an inner bottom wall and an outer bottom wall arranged opposite to each other along the first direction;
the outer bottom wall is welded and electrically connected to the first current collecting plate, and the side plate abuts against an inner wall of the through-hole to block the through-hole.

4. The secondary battery according to claim 3, wherein an inner wall surface of the side plate has an orthographic projection on a projection plane perpendicular to the first direction; and the orthographic projection has two first contour points which are opposite to each other along a second direction, and a first line segment extending along the second direction is formed between the two first contour points, and the first line segment has a length of $A$ mm, which is a maximum dimension of the inner wall surface of the side plate on the projection plane, wherein $3\,\text{mm} \leq A \leq 12\,\text{mm}$; and
the first direction is orthogonal to the second direction.

5. The secondary battery according to claim 3, wherein an outer wall surface of the side plate has an orthographic projection on a projection plane perpendicular to the first direction; and the orthographic projection has two second contour points which are opposite to each other along the second direction, and a second line segment extending along the second direction is formed between the two second contour points, and the second line segment has a length of $B$ mm, which is a maximum dimension of the outer wall surface of the side plate on the projection plane, wherein $3.5\,\text{mm} \leq B \leq 17.5\,\text{mm}$, and it is satisfied: $0.3 \leq A / B \leq 0.99$.

6. The secondary battery according to claim 3, wherein a distance between the inner bottom wall and the outer bottom wall of the groove in the first direction is $t_1$ mm, and a distance of a welded part between the first current collecting plate and the outer bottom wall in the first direction is $t_2$ mm;
satisfying at least one of the following characteristics:

   i),

$$0.1 \text{ mm} \leq t_1 \leq 2 \text{ mm};$$

   ii),

$$0.1 \text{ mm} \leq t_2 \leq 1 \text{ mm};$$

   iii),

$$0.1 \leq t_1 / t_2 \leq 5.$$

7. The secondary battery according to claim 6, wherein a second end face of the terminal is provided with an annular boss surrounding the through-hole, and the annular boss is provided with a first annular groove surrounding the through-hole;
the connecting portion is embedded in the first annular groove, and the connecting portion is welded to a groove wall of the first annular groove.

8. The secondary battery according to claim 7, wherein the connecting portion is provided with a second annular groove, and the sealing member is welded to the groove wall of the first annular groove of the terminal through a groove wall of the second annular groove;

an orthographic projection of a region where the bottom plate is welded to the first current collecting plate on a projection plane perpendicular to the first direction is located within an orthographic projection of a region where the second annular groove is welded to the first annular groove on a projection plane perpendicular to the first direction.

9. The secondary battery according to claim 3, wherein one side of the first current collecting plate away from the electrode assembly in the first direction is provided with a protruding portion, and the protruding portion extends into an inner side of the through-hole, and the protruding portion is welded to the bottom plate.

10. The secondary battery according to claim 9, wherein a gap exists between an outer wall of the protruding portion and an inner wall of the through-hole.

11. A battery pack, comprising the secondary battery according to any one of claims 1 to 10.

FIG. 1

FIG. 2

FIG. 3

FIG. 4

40

42

43

41

402

401

FIG. 5

533

502

53

G

50

54

52

G

501

532

51

531

FIG. 6

G-G

FIG. 7

FIG. 8

FIG. 9

FIG. 10

EP 4 746 178 A1

## INTERNATIONAL SEARCH REPORT

| International application No. |
| --- |
| **PCT/CN2024/092650** |

| A. | CLASSIFICATION OF SUBJECT MATTER |
| --- | --- |

H01M50/528(2021.01)i; H01M50/552(2021.01)i; H01M50/186(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 盖, 极柱, 端子, 集流, 集电, 汇流, 转接, 连接, 焊, 孔, battery, cell, cover, pole, terminal, collect+, adapt+, connect+, weld+, hole, pore

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113991186 A (SVOLT ENERGY TECHNOLOGY (WUXI) CO., LTD.) 28 January 2022 (2022-01-28) description, paragraphs 2 and 34-104, and figures 1-7 | 1, 11 |
| Y | CN 113991186 A (SVOLT ENERGY TECHNOLOGY (WUXI) CO., LTD.) 28 January 2022 (2022-01-28) description, paragraphs 2 and 34-104, and figures 1-7 | 2-11 |
| X | US 2017117575 A1 (COMMISSARIAT A L'ENERGIE ATOMIQUE ET AUX ENERGIES ALTERNATIVES) 27 April 2017 (2017-04-27) description, paragraphs 79-113, and figures 1-7 | 1, 11 |
| Y | US 2017117575 A1 (COMMISSARIAT A L'ENERGIE ATOMIQUE ET AUX ENERGIES ALTERNATIVES) 27 April 2017 (2017-04-27) description, paragraphs 79-113, and figures 1-7 | 2-11 |
| X | CN 115513514 A (TIANJIN LISHEN BATTERY JOINT-STOCK CO., LTD.) 23 December 2022 (2022-12-23) description, paragraphs 37-82, and figures 1-11 | 1, 11 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 July 2024** | **24 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/092650** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 115513514 A (TIANJIN LISHEN BATTERY JOINT-STOCK CO., LTD.) 23 December 2022 (2022-12-23)<br>        description, paragraphs 37-82, and figures 1-11 | 2-11 |
| Y | CN 114883757 A (ENVISION AESC TECHNOLOGY (JIANGSU) CO., LTD. et al.) 09 August 2022 (2022-08-09)<br>        description, paragraphs 55-79, and figures 1-12 | 2-11 |
| A | CN 219393540 U (SINOCHEM YANGZHOU NEW ENERGY SCIENCE & TECHNOLOGY CO., LTD. et al.) 21 July 2023 (2023-07-21)<br>        entire document | 1-11 |

Form PCT/ISA/210 (second sheet) (July 2022)

**INTERNATIONAL SEARCH REPORT**
**Information on patent family members**

International application No.

**PCT/CN2024/092650**

| Patent document cited in search report | | | Publication date (day/month/year) | Patent family member(s) | | | Publication date (day/month/year) |
|---|---|---|---|---|---|---|---|
| CN | 113991186 | A | 28 January 2022 | None | | | |
| US | 2017117575 | A1 | 27 April 2017 | JP | 2017510959 | A | 13 April 2017 |
| | | | | JP | 6755183 | B2 | 16 September 2020 |
| | | | | WO | 2015155698 | A1 | 15 October 2015 |
| | | | | FR | 3019686 | A1 | 09 October 2015 |
| | | | | FR | 3019686 | B1 | 06 May 2016 |
| | | | | EP | 3130020 | A1 | 15 February 2017 |
| | | | | EP | 3130020 | B1 | 27 October 2021 |
| | | | | US | 10276888 | B2 | 30 April 2019 |
| CN | 115513514 | A | 23 December 2022 | None | | | |
| CN | 114883757 | A | 09 August 2022 | None | | | |
| CN | 219393540 | U | 21 July 2023 | None | | | |

Form PCT/ISA/210 (patent family annex) (July 2022)

**REFERENCES CITED IN THE DESCRIPTION**

**Patent documents cited in the description**

- CN 202322303114